# FASCICULE DE BREVET EUROPEEN

(11) **EP 4 251 401 B1**
(45) Date de publication et mention de la délivrance du brevet: **31.07.2024**
(21) Numéro de dépôt: 21820170.5
(22) Date de dépôt: 24.11.2021
(51) Int. Cl.: B29C 49/42, B29C 49/78, B29C 49/46, B29C 49/36

(54) **PROCÉDÉ DE STÉRILISATION DU RÉSEAU DE SOUFFLAGE D'UNE MACHINE DE FORMAGE DE RÉCIPIENTS THERMOPLASTIQUES**
VERFAHREN ZUM STERILISIEREN DES BLASNETZWERKS EINER MASCHINE ZUR HERSTELLUNG VON THERMOPLASTISCHEN BEHÄLTERN
METHOD FOR STERILISING THE BLOWING NETWORK OF A MACHINE FOR FORMING THERMOPLASTIC CONTAINERS

(30) Priorité: 26.11.2020 FR 2012172
(43) Date de publication de la demande: 04.10.2023
(73) Titulaire: Sidel Participations, 76930 Octeville-sur-Mer (FR)
(72) Inventeur: MARIE, Jérémy, 76930 Octeville-sur-Mer (FR); LETELLIER, Sandy, 76930 Octeville-sur-Mer (FR); TOUTAIN, Gregory, 76930 Octeville-sur-Mer (FR)
(74) Mandataire: Sidel Group
(86) Numéro de dépôt international: PCT/EP2021/082863
(87) Numéro de publication internationale: WO 2022/112350

(56) Documents cités:
- JP-A- 2013 215 675
- US-A- 5 906 794
- US-A1- 2020 114 566

## Description

### Domaine technique de l'invention

L'invention se rapporte à un procédé de stérilisation d'une machine de formage pour le formage de récipients à partir de préformes en matériau thermoplastique, la machine de formage comportant un réseau de soufflage qui comporte des conduites qui raccordent une source commandée de gaz de soufflage comprimé à au moins une tuyère de soufflage pour former les récipients par soufflage, la machine de formage comportant un dispositif de stérilisation du réseau de soufflage comportant :
- une source commandée d'un gaz de séchage chaud sous pression, distincte de la source commandée de gaz de soufflage, qui est raccordée au réseau de soufflage en un embranchement d'alimentation ;
- une source commandée de vapeur stérilisante comportant un agent oxydant vaporisé ;
- une chambre de mélange de la vapeur stérilisante avec le gaz de séchage pour former un mélange gazeux stérilisant comportant de l'agent oxydant vaporisé et de la vapeur d'eau ;
le procédé comportant :
- une étape de chauffage des conduites du réseau de soufflage par injection uniquement du gaz de séchage chaud sous pression, au cours de laquelle le gaz de séchage chauffe les parois internes des conduites du réseau de soufflage ;
- une deuxième étape d'injection du mélange gazeux stérilisant dans le réseau de soufflage.

### Arrière-plan technique

Pour ce faire, une installation de fabrication de récipients comporte au moins un four pour chauffer des préformes qui est associé à une machine de formage (aussi appelée « souffleuse ») pour le moulage des récipients à partir desdites préformes chaudes. L'installation comporte encore avantageusement une unité de stérilisation pour stériliser au moins l'intérieur des préformes de manière à obtenir des récipients dits « stériles ».

Pour réaliser le moulage par soufflage ou par étirage-soufflage d'une préforme chaude, en une ou plusieurs étapes, il est connu d'utiliser pour le soufflage au moins un fluide, généralement un gaz, tel que de l'air comprimé à des pressions pouvant atteindre des valeurs de 30 ou 40 bars selon les applications. Pour permettre de répartir la matière de manière plus homogène dans le récipient final, il est parfois procédé à une opération préliminaire de présoufflage qui consiste à injecter un fluide de soufflage à plus basse pression, par exemple à 13 bars, dans la préforme avant de procéder à l'opération de soufflage proprement dite au moyen d'un gaz de soufflage à haute pression comme expliqué précédemment.

US2020/114566A1 divulgue un procédé et une machine selon les préambules des revendications 1 et 10.

L'air utilisé pour le soufflage est introduit à l'intérieur de la préforme chaude placée dans un moule de sorte que l'air de soufflage entre directement en contact avec la surface interne du récipient. A cet effet, la machine de formage comporte une source commandée d'air de soufflage qui alimente plusieurs tuyères de soufflage par l'intermédiaire de conduites de soufflage.

Or, la surface interne est elle-même destinée à être ultérieurement en contact avec le produit qui sera conditionné dans le récipient.

La qualité de l'air de soufflage, plus particulièrement l'absence de contaminants, tels que des micro-organismes, des particules comme des poussières, etc., est donc un paramètre important à prendre en compte dans la maîtrise globale des risques de contamination des récipients fabriqués et ceci afin de pouvoir garantir, notamment dans le cas de conditionnement agro-alimentaire, une bonne conservation du produit conditionné, notamment une durée de conservation, et la sécurité du consommateur.

Or, la qualité de l'air comprimé utilisé pour le soufflage est déterminée par un ensemble de facteurs, depuis la qualité de l'air atmosphérique aspiré qui varie selon l'environnement du site industriel et sa localisation par rapport à des sources polluantes, jusqu'à l'état du réseau de distribution et/ou de l'installation.

L'air atmosphérique aspiré et comprimé par au moins un compresseur présente par exemple un degré d'hygrométrie plus ou moins important or l'humidité favorise la corrosion et le développement des micro-organismes.

Une attention particulière est également portée dans le choix des compresseurs, les compresseurs étant selon leur conception, tout particulièrement les moyens de lubrification, susceptibles d'engendrer une contamination chimique de l'air par exemple par de l'huile de lubrification ou encore des poussières de téflon.

C'est la raison pour laquelle, l'air comprimé destiné à être utilisé pour le soufflage est préalablement traité et tout particulièrement filtré par des moyens de filtration de gaz afin d'obtenir un air de soufflage qui soit « stérile », c'est-à-dire notamment exempt de micro-organismes.

L'air comprimé utilisé pour le soufflage est généralement successivement filtré par un système de filtration comportant différents moyens de filtration de gaz.

De manière non limitative, un tel système de filtration d'air destiné au soufflage comporte par exemple des moyens de filtration multiples qui, agencés en série, sont destinés à délivrer en sortie un air stérile.

L'air y est par exemple successivement filtré par des premiers moyens de filtration de type « FFP » pour obtenir notamment un déshuilage, une épuration en eau et une élimination des poussières, puis des deuxièmes moyens de filtration de type « AK » (à charbons actifs) pour ôter toutes les vapeurs d'huile et d'hydrocarbures gazeux pouvant en outre entraîner une nuisance olfactive et gustative, et enfin par des troisièmes moyens de filtration de type « SRF » pour retenir les micro-organismes.

En effet, l'air de soufflage est susceptible d'être un vecteur de contamination de l'intérieur de la préforme, et donc du récipient, en y introduisant des contaminants et tout particulièrement des micro-organismes (virus, germes, spores, etc.).

La maîtrise de la qualité de l'air comprimé utilisé pour le soufflage est encore plus importante lorsque, dans le procédé de fabrication des récipients, le remplissage des récipients est réalisé dans un environnement aseptique directement après le moulage du récipient obtenu par soufflage ou par étirage-soufflage d'une préforme chaude.

En effet, dans un tel procédé de fabrication, la stérilisation est généralement effectuée en amont sur les préformes, avant leur transformation en récipients, de sorte qu'il est ensuite essentiel de prévenir les risques de contamination des préformes stérilisées, comme celle des récipients fabriqués à partir de ces préformes.

L'invention vise à stériliser les conduites de soufflage qui sont agencées en aval des moyens de filtrations et qui conduisent l'air de soufflage stérile jusqu'aux tuyères de soufflage. Ceci permet notamment de garantir que l'air demeure stérile jusqu'à ce qu'il atteigne les préformes.

La stérilisation des conduites de soufflage doit permettre de détruire les microorganismes présents afin d'en prévenir le développement dans les conduites de soufflage et ainsi éliminer les risques de contamination des préformes.

Dans le cas d'une application industrielle comme celle de la fabrication de récipients destinés au conditionnement de produits agro-alimentaire, il est important de pouvoir garantir une qualité et tout particulièrement la stérilité de l'air de soufflage.

Pour stériliser les conduites de soufflage, il est connu de faire circuler un mélange gazeux stérilisant comportant un agent oxydant en phase gazeuse dans les conduites de soufflage. L'agent oxydant en phase vapeur est généralement formée par évaporation de l'agent oxydant en phase liquide, par exemple du peroxyde d'hydrogène (H2O2).

Un tel mélange gazeux stérilisant présente l'inconvénient de se condenser sur les parois internes des conduites de soufflage. Le contact avec l'agent oxydant en phase vapeur permet d'éliminer les microorganismes sans endommager les conduites de soufflage. Cependant, au regard du fort pouvoir oxydant l'agent oxydant, les gouttes de condensation comportant de l'agent oxydant endommagent rapidement les parois internes des conduites par corrosion.

Pour résoudre ce problème, il est connu de réaliser les conduites de soufflage en un matériau inoxydable. Cependant, un tel matériau est très onéreux et cela augmente très sensiblement le coût de fabrication de la machine de formage.

L'invention propose donc une solution qui permette d'éviter l'apparition de condensation de l'agent oxydant lors l'opération de stérilisation. Cela permettrait notamment de pouvoir utiliser un matériau métallique moins onéreux pour la fabrication des conduites de soufflage.

### Résumé de l'invention

L'invention concerne un procédé de stérilisation d'une machine de formage pour le formage de récipients à partir de préformes en matériau thermoplastique, la machine de formage comportant un réseau de soufflage qui comporte des conduites qui raccordent une source commandée de gaz de soufflage comprimé à au moins une tuyère de soufflage pour former les récipients par soufflage, la machine de formage comportant un dispositif de stérilisation du réseau de soufflage comportant :
- une source commandée d'un gaz de séchage chaud sous pression, distincte de la source commandée de gaz de soufflage, qui est raccordée au réseau de soufflage en un embranchement d'alimentation ;
- une source commandée de vapeur stérilisante comportant un agent oxydant vaporisé ;
- une chambre de mélange de la vapeur stérilisante avec le gaz de séchage pour former un mélange gazeux stérilisant comportant de l'agent oxydant vaporisé et de la vapeur d'eau ;
le procédé comportant :
- une étape de chauffage des conduites du réseau de soufflage par injection uniquement du gaz de séchage chaud sous pression, au cours de laquelle le gaz de séchage chauffe les parois internes des conduites du réseau de soufflage ;
- une deuxième étape d'injection du mélange gazeux stérilisant dans le réseau de soufflage,
caractérisé en ce que la deuxième étape d'injection du mélange gazeux stérilisant est enclenchée lorsque le point le plus froid, dit point froid, du réseau de soufflage exposé au mélange gazeux stérilisant atteint une température de traitement qui est supérieure à une température de condensation de la vapeur d'eau et de l'agent stérilisant vaporisé au niveau dudit point froid, la température de traitement étant inférieure à la température du gaz de séchage chaud prise à l'embranchement d'alimentation.

Selon une autre caractéristique du procédé réalisé selon les enseignements de l'invention, la température de traitement est déterminée de manière que le rapport, dit saturation relative, entre la pression partielle du mélange de vapeur d'eau et d'agent stérilisant vaporisé sur la pression de vapeur saturante dudit mélange au niveau du point froid du réseau de soufflage soit comprise dans un plage déterminée s'étendant entre 70% et 90%.

Selon une autre caractéristique du procédé réalisé selon les enseignements de l'invention, la plage déterminée s'étend entre 80% et 90%.

Selon une autre caractéristique du procédé réalisé selon les enseignements de l'invention, la température de traitement est mesurée au moyen d'une sonde agencée au niveau du point froid.

Selon une autre caractéristique du procédé réalisé selon les enseignements de l'invention, la saturation relative est mesurée au niveau du point froid du réseau de soufflage au moyen d'un capteur.

Selon une autre caractéristique du procédé réalisé selon les enseignements de l'invention, la température, l'humidité et la pression du gaz de séchage au niveau de l'embranchement d'alimentation sont constants.

Selon une autre caractéristique du procédé réalisé selon les enseignements de l'invention, la source commandée de gaz de séchage est commandée à débit constant pour toute la durée du procédé de stérilisation.

Selon un premier mode de réalisation du procédé réalisé selon les enseignements de l'invention, la source commandée de vapeur stérilisante est commandée à un débit constant lors de la deuxième étape d'injection du mélange gazeux stérilisant du procédé de stérilisation.

Selon un deuxième mode de réalisation du procédé réalisé selon les enseignements de l'invention, la source commandée de vapeur stérilisante présente un débit susceptible d'occuper au moins un débit intermédiaire entre un débit nul et un débit maximal tout au long du procédé de stérilisation.

Selon une autre caractéristique du procédé réalisé selon les enseignements de l'invention, le débit de vapeur stérilisante dans la chambre de mélange est commandé en fonction de la mesure réalisée par le capteur pour maintenir la saturation relative dans la plage déterminée au niveau du point froid.

L'invention concerne aussi une machine de formage pour la mise en oeuvre du procédé réalisé selon les enseignements de l'invention, la machine de formage comportant un réseau de soufflage qui comporte des conduites qui raccordent une source commandée de gaz de soufflage comprimé à au moins une tuyère de soufflage pour former les récipients par soufflage, la machine de formage comportant un dispositif de stérilisation du réseau de soufflage comportant :
- une source commandée d'un gaz de séchage chaud sous pression, distincte de la source commandée de gaz de soufflage, qui est raccordée au réseau de soufflage en un embranchement d'alimentation ;
- une source commandée de vapeur stérilisante comportant un agent oxydant vaporisé ;
- une chambre de mélange de la vapeur stérilisante avec le gaz de séchage pour former un mélange gazeux stérilisant comportant de l'agent oxydant vaporisé et de la vapeur d'eau ;
caractérisée en ce qu'elle comporte une sonde de température agencée de manière à mesurer la température d'une conduite du réseau de soufflage dans la tuyère ou à proximité de la tuyère.

### Brève description des figures

D'autres caractéristiques et avantages de l'invention apparaitront au cours de la lecture de la description détaillée qui va suivre pour la compréhension de laquelle on se reportera aux dessins annexés dans lesquels :
[Fig. 1] La [Fig. 1] est un schéma pneumatique qui représente une machine de formage pour la mise en oeuvre du procédé réalisé selon les enseignements de l'invention.
[Fig.2] La [Fig.2] est un schéma pneumatique qui représente plus en détails une des stations de moulage qui équipe la machine de formage de la [Fig.1].
[Fig.3] La [Fig.3] est un schéma pneumatique qui représente plus en détails un dispositif de stérilisation qui équipe la machine de formage de la [Fig.1].
[Fig.4] La [Fig.4] est un schéma-bloc qui représente un procédé de stérilisation réalisé selon un premier mode de réalisation de l'invention qui met en oeuvre la machine de formage représentée à la [Fig.1].
[Fig.5] La [Fig.5] est un diagramme qui représente la température dans le réseau de soufflage de la machine de formage de la [Fig.1] en fonction de la longueur de conduites parcourue en direction des tuyères depuis un point d'embranchement d'alimentation avec le dispositif de stérilisation.
[Fig.6] La [Fig.6] est un diagramme qui représente l'évolution de la saturation relative du gaz présent dans un point froid du réseau de soufflage de la machine de formage de la [Fig.1] en fonction du temps lors de la mise en oeuvre du procédé représenté à la [Fig.4].
[Fig.7] La [Fig.7] est un schéma-bloc qui représente un procédé de stérilisation réalisé selon un deuxième mode de réalisation de l'invention qui met en oeuvre la machine de formage représentée à la [Fig.1].

### Description détaillée de l'invention

Dans la suite de la description, des éléments présentant une structure identique ou des fonctions analogues seront désignés par une même référence.

Dans la suite de la description, les termes "amont" et "aval" sont utilisés pour décrire le sens d'écoulement d'un gaz dans des conduites.

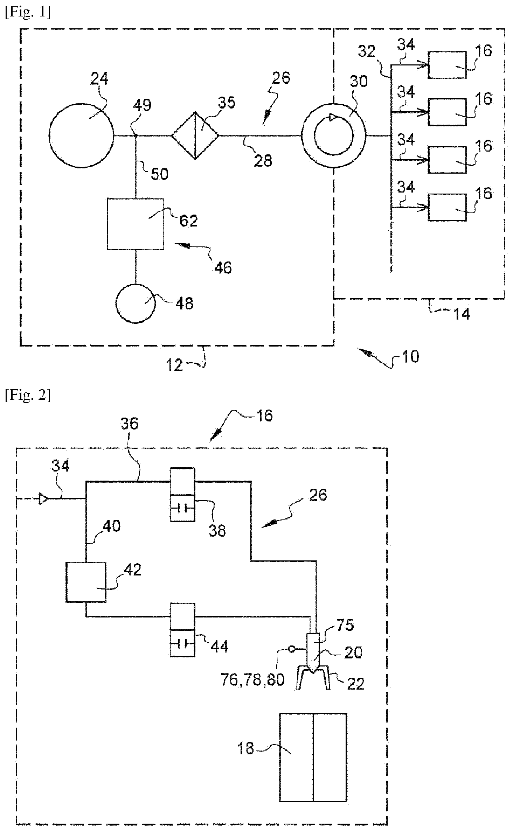

On a représenté à la [Fig.1] un schéma pneumatique illustrant un exemple de réalisation d'une machine 10 de formage de récipients par soufflage ou étirage-soufflage de préforme en matériau thermoplastique.

La machine 10 de formage présente une partie 12 fixe par rapport au sol et une partie 14 tournante qui est montée sur un carrousel tournant (non représenté).

La partie 14 tournante comporte plusieurs stations 16 de moulage qui sont embarquées sur le carrousel. Cette disposition permet de produire des récipients en grandes séries. Comme représenté à la [Fig.2], chaque station 16 de moulage comporte un moule 18 qui est destiné à recevoir une préforme et qui présente une empreinte du récipient à produire. Chaque station 16 de moulage comporte aussi une tuyère 20 de soufflage qui est conformée de manière à insuffler un gaz de formage sous pression dans la préforme reçue dans le moule 18. Il s'agit par exemple d'une tuyère 20 qui comporte un embout 22 en forme de cloche qui est destiné à venir coiffer un col de la préforme reçue dans le moule 18.

La partie 12 fixe comporte une source 24 commandée de gaz de soufflage comprimé. Le gaz de soufflage est par exemple comprimé à environ 40 bars. Le gaz de soufflage est par exemple de l'air.

La source 24 commandée de gaz de soufflage est raccordée aux tuyères 20 de chaque stations 16 de moulage par un réseau de conduites soufflage, dit réseau 26 de soufflage dans la suite de la description et dans les revendications. Les conduites du réseau 26 de soufflage sont ici réalisées dans un matériau qui est susceptible d'être oxydé rapidement au contact d'un agent oxydant sous forme liquide, tel que du peroxyde d'hydrogène ou de l'acide acétique, contrairement à des conduites réalisées en matériau inoxydable.

Plus particulièrement le réseau 26 de soufflage comporte une conduite 28 principale d'alimentation qui raccorde la source 24 commandée de gaz de soufflage à un joint 30 tournant qui permet de faire l'interface entre la partie 12 fixe et la partie 14 tournante. Le réseau 26 de soufflage comporte aussi au moins une rampe 32 de distribution qui appartient à la partie 14 tournante et qui est raccordée à la conduite 28 principale d'alimentation par l'intermédiaire du joint 30 tournant. La rampe 32 de distribution est raccordée à chacune des stations 16 de moulage au moyens de conduites 34 de distribution associées.

Pour garantir la qualité de l'air de soufflage, un organe 35 de filtration, par exemple un filtre de type "SRF", est interposé dans la conduite 28 principale d'alimentation.

Comme représenté à la [Fig.2], dans chacune des stations 16 de moulage, le réseau 26 de soufflage comporte aussi une conduite 36 de soufflage haute pression qui est raccordée la conduite 34 de distribution associée à la tuyère 20. Une vanne 38 de soufflage à deux voies est interposée dans la conduite 36 de soufflage haute pression. La vanne 38 de soufflage est commandée alternativement entre une position ouverte et une position fermée.

Dans chacune des stations 16 de moulage, le réseau 26 de soufflage comporte aussi une conduite 40 de présoufflage basse pression qui raccorde la conduite 34 de distribution associée à la tuyère 20 en parallèle avec la conduite 36 de soufflage haute pression. La conduite 40 de soufflage basse pression comporte un organe 42 de régulation de la pression du gaz de soufflage afin d'en faire baisser la pression, par exemple jusqu'à environ 13 bars. Une vanne 44 de présoufflage à deux voies est interposée dans la conduite 40 de soufflage basse pression. La vanne 44 de présoufflage est commandée alternativement entre une position ouverte et une position fermée.

La machine 10 de formage comporte aussi un dispositif 46 de stérilisation du réseau 26 de soufflage. Le dispositif 46 de stérilisation comporte une source 48 commandée d'un gaz de séchage chaud sous pression, par exemple de l'air. La source 48 commandée de gaz de séchage est distincte de la source 24 commandée de gaz de soufflage. La source 48 commandée de gaz de séchage est raccordée au réseau 26 de soufflage en un embranchement 49 d'alimentation par l'intermédiaire d'une conduite 50 de stérilisation.

La source 48 commandée de gaz de séchage est ici agencée sur la partie 12 fixe de la machine 10 de formage. L'embranchement 49 d'alimentation est de préférence aussi agencé sur la partie 12 fixe de la machine 10 de formage, en amont du joint 30 tournant. L'embranchement 49 d'alimentation est ici agencé dans la conduite 28 principale de soufflage. L'embranchement 49 d'alimentation est plus particulièrement agencé en amont de l'organe 35 de filtration.

En variante non représentée de l'invention, l'embranchement d'alimentation est agencé en aval mais à proximité de l'organe de filtration. Dans ce cas, il est préférable de prévoir des moyens de stérilisation supplémentaires pour l'organe de stérilisation.

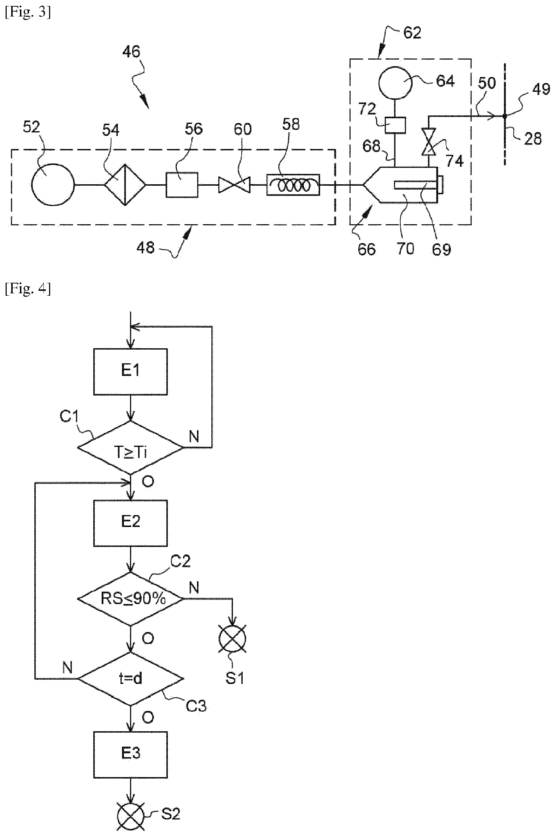

On a représenté plus en détails à la [Fig.3] le dispositif 46 de stérilisation. La source 48 commandée de gaz de séchage comporte une source 52 de gaz sous pression, par exemple de l'air, qui alimente la conduite 50 de stérilisation. La source 48 commandée de gaz de séchage comporte en outre un filtre 54 pour garantir que le gaz de séchage ne comporte aucune impureté, un organe 56 de régulation de la pression, et un organe 58 de chauffage du gaz de séchage à une température déterminée. La température "Tg" du gaz de séchage chaud est par exemple d'environ 180°C. La source 48 commandée de gaz de séchage comporte en outre une vanne 60 de régulation du débit de gaz de séchage. La vanne 60 de régulation est ici commandée dans une position fermée dans laquelle le débit de gaz de séchage est nul ou dans une position ouverte dans laquelle le gaz de séchage est délivré avec un débit constant.

Le dispositif 46 de stérilisation comporte aussi une source 62 commandée de vapeur stérilisante. Comme représenté à la [Fig.3], elle comporte un réservoir 64 de liquide stérilisant comportant un agent oxydant. L'agent oxydant est par exemple du peroxyde d'hydrogène (H2O2) ou de l'acide peracétique. Le liquide stérilisant est par exemple formé d'une solution aqueuse comportant une concentration déterminée d'agent oxydant, par exemple une solution de peroxyde d'hydrogène dilué à 25% dans de l'eau.

La source 62 commandée de vapeur stérilisante comporte aussi un évaporateur 66 dans lequel de la vapeur stérilisante est produite par évaporation totale du liquide stérilisant fourni par le réservoir 64 de liquide stérilisant par l'intermédiaire d'une conduite 68 d'injection. L'évaporateur 66 comporte un organe 69 chauffant à une température suffisante pour permettre l'évaporation instantanée du liquide stérilisant. L'organe 69 chauffant est agencé dans une chambre de l'évaporateur 66. La vapeur stérilisante comporte ainsi de l'agent oxydant vaporisé et de la vapeur d'eau dans des proportions bien définies.

La source 62 commandée de vapeur stérilisante comporte en outre un dispositif 72 de distribution du liquide stérilisant qui est interposé entre le réservoir 64 de liquide stérilisant et l'évaporateur 66. Il s'agit ici d'un dispositif 72 de distribution à débit réglable.

La chambre de l'évaporateur 66 forme ici une chambre 70 de mélange de la vapeur stérilisante avec le gaz de séchage pour former un mélange gazeux stérilisant présentant une pression partielle de vapeur stérilisante déterminée en fonction du débit massique de gaz de séchage et du débit massique de vapeur stérilisante. A cet effet, la chambre 70 de mélange est interposée dans la conduite 50 de stérilisation.

La chambre 70 de mélange étant ici formée directement par la chambre de l'évaporateur 66, le débit massique de vapeur stérilisante est compris comme étant la masse de vapeur stérilisante produite par évaporation dans l'évaporateur 66 par unité de temps.

En variante non représentée, la chambre de mélange est distincte de la chambre de l'évaporateur. La chambre de mélange est alors agencée en aval de l'évaporateur selon le sens d'écoulement de la vapeur stérilisante.

Le dispositif 46 de stérilisation comporte aussi une vanne 74 de régulation du débit qui est interposée dans la conduite 50 de stérilisation en aval de la chambre 70 de mélange. La vanne 74 de régulation est ici commandée soit dans une position fermée dans laquelle elle interdit le passage de tout gaz vers le réseau 26 de soufflage, soit dans une position ouverte.

La machine 10 de formage est susceptible de fonctionner selon un mode de production dans lequel le dispositif 46 de stérilisation est commandée de manière à n'émettre ni vapeur stérilisante, ni gaz de séchage dans le réseau 26 de soufflage. En mode de production; la source 24 commandée de gaz de soufflage est commandée de manière à injecter du gaz de soufflage dans le réseau 26 de soufflage. La vanne 38 de soufflage et la vanne 44 de présoufflage de chaque station 16 de moulage sont commandées en fonction de la position de ladite station 16 de moulage par rapport à la partie 12 fixe pour insuffler tour à tour du gaz de soufflage à basse pression puis du gaz de soufflage à haute pression pour permettre le formage du récipient à partir d'une préforme.

La machine 10 de formage est aussi susceptible de fonctionner selon un mode de stérilisation qui ne peut être mis en oeuvre que lorsque le mode de production est désactivé. Le mode de stérilisation est par exemple activé lors d'un changement de format de récipient et/ou encore à intervalle de temps régulier pour éviter le développement de germes dans le réseau 26 de soufflage. De manière générale, le mode de stérilisation est avantageusement activé avant toute mise en production de la machine 10 de formage. Lors de la mise en oeuvre du mode de stérilisation, le moule est vide, c'est-à-dire qu'il ne comporte aucune préforme.

Lors de son fonctionnement en mode stérilisation, la machine 10 de formage met en oeuvre un procédé de stérilisation qui est représenté à la [Fig.4].

Pour la suite, on définit une température "Td" de condensation d'un mélange de vapeur d'eau et d'agent stérilisant vaporisé, pour des concentrations molaires respectives déterminées et pour une pression totale déterminée du mélange gazeux stérilisant, comme étant la température en-dessous de laquelle la vapeur d'eau et/ou l'agent stérilisant vaporisé commence à se condenser. La température "Td" de condensation est par exemple déterminée par des diagrammes de phase ou des abaques qui indiquent la température "Td" de condensation en fonction de la pression et/ou en fonction de la concentration molaire d'agent stérilisant vaporisé dans le mélange gazeux stérilisant. Ce paramètre est généralement donné par le fournisseur d'agent stérilisant lors de la livraison du produit. Il est aussi possible de trouver ce paramètre ou de le déduire facilement d'ouvrages bien connus de l'homme du métier tels que "Hydrogen Peroxide" de Schumb et al. datant de 1955.

On définit aussi la pression partielle d'agent stérilisant vaporisé dans le mélange gazeux stérilisant comme étant la pression qu'aurait ledit agent stérilisant vaporisé seul. Cette pression partielle dépend notamment de la température ambiante et de la concentration molaire d'agent stérilisant vaporisé présente dans le mélange gazeux stérilisant.

De la même manière, on définit aussi la pression partielle de vapeur d'eau dans le mélange gazeux stérilisant comme étant la pression qu'aurait la vapeur d'eau seule. Cette pression partielle dépend notamment de la température ambiante et de la concentration molaire de vapeur d'eau présente dans le mélange gazeux stérilisant.

La concentration molaire peut être définie à partir de la concentration massique ou de la concentration volumique d'agent stérilisant. Ainsi, connaissant le débit massique de vapeur stérilisante et le débit massique de gaz de séchage, il est possible de connaître la concentration molaire d'agent stérilisant à l'état de vapeur contenue dans le mélange gazeux stérilisant.

On définit aussi la pression de vapeur saturante comme étant la pression partielle d'un composant gazeux dans un mélange gazeux stérilisant à partir de laquelle ledit composant commence à se condenser. La pression de vapeur saturante croît avec la température ambiante. Ainsi, dans une atmosphère chaude, le mélange gazeux stérilisant pourra contenir une plus grande concentration dudit composant gazeux avant d'atteindre la pression de vapeur saturante par rapport à une atmosphère plus froide, dans les mêmes conditions de pression.

On définit la saturation "RS" relative du mélange gazeux stérilisant comme étant le rapport entre la somme des pressions partielles d'agent stérilisant à l'état de vapeur et de vapeur d'eau par rapport à la pression de vapeur saturante de la vapeur d'eau et de l'agent oxydant vaporisé du mélange gazeux stérilisant. La saturation "RS" relative est ici exprimée en pourcentage, les conditions de températures étant déterminées. Ainsi, tant que la saturation "RS" relative est inférieure à 100%, aucune condensation n'apparaît dans le mélange gazeux stérilisant. Lorsque la saturation "RS" relative atteint 100%, l'eau et/ou l'agent oxydant commencent à se condenser. La saturation "RS" relative du mélange d'agent stérilisant vaporisé et de vapeur d'eau est par exemple déterminée par des diagrammes de phase ou des abaques qui indiquent la saturation "RS" relative en fonction de la pression et/ou en fonction de la température ambiante et/ou en fonction de la concentration molaire d'agent stérilisant vaporisé dans le mélange gazeux stérilisant.

Enfin, on définit l'humidité relative du gaz de séchage comme étant la pression partielle de vapeur d'eau sur la pression de vapeur saturante de la vapeur d'eau du gaz de séchage.

Dans le procédé réalisé selon les enseignements de l'invention, certains paramètres sont constants tout au long du procédé de stérilisation tels que la température "Tg", l'humidité relative et la pression du gaz de séchage au niveau de l'embranchement 49 d'alimentation. Le débit de la source 48 commandée de gaz de séchage est aussi constant lors de toutes les étapes du procédé de stérilisation.

Préalablement au commencement du procédé de stérilisation, une consigne de débit de vapeur stérilisante est déterminée de manière à garantir une stérilisation satisfaisante du réseau 26 de soufflage. La consigne de débit est par exemple d'environ 0,19 kg/h pour une machine 10 de formage comportant six postes ou encore d'environ 1,9 kg/h pour une machine 10 de formage comportant trente postes. Cette consigne est par exemple fonction de la longueur du réseau 26 de soufflage. On détermine aussi une durée "d" d'exposition du réseau 26 de soufflage au mélange gazeux stérilisant. La durée du procédé de stérilisation est par exemple d'environ 30 minutes, chacune des trois étapes, telles que décrites par la suite, durant environ 10 minutes.

Selon un premier mode de réalisation du procédé de stérilisation, la consigne de débit de vapeur stérilisante et la durée "d" d'exposition sont ici fixées préalablement. Il s'agit par exemple de valeurs constantes qui sont déterminées expérimentalement ou par calcul en fonction de caractéristiques de la machine 10 de formage, tel que le nombre de stations 16 de moulage.

Le procédé selon l'invention propose en revanche d'agir sur la température du réseau 26 de soufflage pour éviter la condensation de la vapeur stérilisante dans les conduites du réseau 26 de soufflage.

Pour permettre la stérilisation de la totalité des conduites du réseau 26 de soufflage, il est prévu d'ouvrir les vannes 38 de soufflage et les vannes 44 de présoufflage pour toute la durée du procédé de stérilisation comme cela est représenté à la [Fig.2]. La source 24 commandée de gaz de soufflage est commandée en position fermée pour toute la durée du procédé de stérilisation.

Le procédé comporte une première étape "E1" de chauffage des conduites du réseau 26 de soufflage. Lors de cette première étape "E1", seul le gaz de séchage chaud sous pression est injecté dans le réseau 26 de soufflage avec le débit déterminé. Le gaz de séchage chauffe ainsi chaque conduite du réseau 26 de soufflage au moins jusqu'à une température "Ti" de traitement par écoulement dans un sens unique depuis l'embranchement 49 d'alimentation jusqu'à la tuyère 20.

Le procédé comporte aussi une deuxième étape "E2" d'injection du mélange gazeux stérilisant dans les conduites de soufflage, qui est déclenchée à l'issue de la première étape "E1" de chauffage. Le dispositif 72 de distribution du liquide stérilisant est commandé pour injecter le liquide stérilisant avec un débit correspondant à la consigne de débit de vapeur stérilisante. Au cours de cette étape "E2" d'injection du mélange gazeux stérilisant, l'agent oxydant vaporisé présent dans le mélange gazeux stérilisant stérilise les conduites du réseau 26 de soufflage par contact direct. Le mélange gazeux stérilisant s'écoule dans un sens unique depuis l'embranchement 49 d'alimentation jusqu'à la tuyère 20. Il est prévu une conduite (non représentés) d'aspiration du mélange gazeux stérilisant qui est agencé en aval de la tuyère 20 ou qui est raccordé à la tuyère à proximité de l'embout 22 ou encore au niveau du moule pour permettre d'évacuer le mélange gazeux stérilisant comportant l'agent stérilisant après son passage par le réseau 26 de soufflage.

Enfin, une troisième et dernière étape "E3" d'aération est déclenchée lorsque la durée "d" d'exposition est atteinte, comme indiqué par la condition "C3". Le dispositif 72 de distribution du liquide stérilisant est alors fermé pour interrompre la production de vapeur stérilisante. Le débit de gaz de séchage est en revanche maintenu. Le gaz de séchage continu donc à circuler, seul, dans les conduites du réseau 26 de soufflage le temps nécessaire pour évacuer les résidus de vapeur stérilisante. Le procédé est alors terminé, comme indiqué par la référence "S2".

La première étape "E1" de chauffage a pour but de chauffer les conduites du réseau 26 de soufflage, c'est-à-dire les parois internes formant lesdites conduites, à une température de traitement "Ti" supérieure à la température "Td" de condensation pour garantir que la vapeur stérilisante ne se condensera pas au contact des conduites du réseau 26 de soufflage.

La deuxième étape "E2" d'injection du mélange gazeux stérilisant est déclenchée avant que toutes les conduites du réseau 26 de soufflage ne soient chauffées de manière homogène. Du fait de son chauffage hétérogène en début de procédé, le réseau 26 de soufflage présente donc un tronçon de conduite, dit "point 75 froid", qui est plus froid que le reste des conduites du réseau 26 de soufflage. La deuxième étape "E2" d'injection du mélange gazeux stérilisant est plus particulièrement déclenchée lorsque le point 75 froid du réseau 26 de soufflage exposé au mélange gazeux stérilisant atteint la température "Ti" de traitement, la température "Ti" de traitement étant inférieure à la température "Tg" du gaz de séchage chaud prise à l'embranchement 49 d'alimentation.

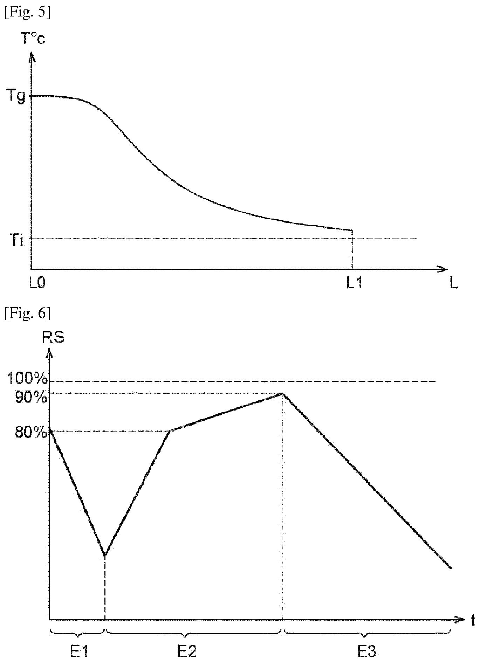

Ce point 75 froid est généralement situé dans la tuyère 20 ou à proximité de la tuyère 20, par exemple directement en amont de la tuyère 20, ou en aval de la tuyère 20 dans le moule 18. En effet, les conduites du réseau 26 de soufflage sont à une température froide relativement à la température "Ti" de traitement en début de procédé. Lors de son écoulement dans les conduites du réseau 26 de soufflage, le gaz de séchage chaud va, dans un premier temps, échanger en priorité des calories avec les conduites du réseau 26 de soufflage situées à proximité de l'embranchement 49 d'alimentation, de sorte que, comme cela est indiqué à la [Fig.5], il va s'établir un gradient de température décroissant en fonction de la longueur "L" de conduites parcourue d'amont en aval dans le réseau 26 de soufflage depuis l'embranchement 49 d'alimentation, indiqué par le point "L0", vers les tuyères 20, indiqué par le point "L1".

Ainsi, lorsque le point 75 froid atteint la température "Ti" de traitement, le réseau 26 de soufflage n'est pas chauffé de manière homogène, mais selon un gradient décroissant avec la longueur "L" parcourue d'amont en aval depuis l'embranchement 49 d'alimentation. Ainsi, la deuxième étape "E2" d'injection du mélange gazeux stérilisant est enclenchée avant que le réseau 26 de soufflage ne soit chauffé à une température homogène. Cela permet de déclencher plus rapidement la deuxième étape "E2" d'injection du mélange gazeux stérilisant, et ainsi de réduire la durée totale du procédé et l'énergie consommée par le procédé.

La température "Ti" de traitement est supérieure à la température "Td" de condensation de la vapeur d'eau et de l'agent stérilisant vaporisé au niveau dudit point 75 froid pour éviter toute condensation de l'agent oxydant vaporisé et/ou de la vapeur d'eau.

Pour déterminer que le point 75 froid a atteint la température "Ti" de traitement, il est par exemple prévu d'agencer une sonde 76 de température au niveau du point 75 froid. Cette sonde 76 mesure l'évolution de la température pendant la première étape "E1" de chauffage, et lorsque la condition "C1" de température mesurée est égale à la température "Ti" de traitement, la deuxième étape "E2" d'injection du mélange gazeux stérilisant est enclenchée.

En variante non représentée de l'invention, la durée nécessaire pour atteindre la température "Ti" de traitement au niveau du point le plus froid est déterminée expérimentalement. La deuxième étape "E2" d'injection du mélange gazeux stérilisant est alors enclenchée à l'issue de cette durée.

Bien entendu, au long de l'étape "E2" d'injection du mélange gazeux stérilisant, la température du point 75 froid va continuer à augmenter au-delà de la température "Ti" de traitement sous l'effet du passage du mélange gazeux stérilisant qui présente sensiblement la même température "Tg" que le gaz de séchage. Ainsi, la pression de vapeur saturante du mélange d'agent stérilisant vaporisé et de vapeur d'eau augmente aussi. Ceci garantit qu'aucune condensation n'apparaitra durant cette deuxième étape "E2" d'injection du mélange gazeux stérilisant.

La première étape "E1" de chauffage permet en outre de faire baisser l'humidité relative dans les conduites du réseau 26 de soufflage. De l'eau condensée serait en effet susceptible de nuire à l'efficacité du procédé de stérilisation et de dégrader les conduites du réseau 26 de soufflage. Selon une variante non représentée de l'invention, l'humidité relative du gaz présent dans les conduites du réseau 26 de soufflage est par exemple mesurée au moyen d'un capteur 78 d'humidité relative pour garantir que les conduites du réseau 26 de soufflage sont suffisamment sèche pour enclencher la deuxième étape "E2" d'injection du mélange gazeux stérilisant, notamment lorsque l'humidité relative est inférieure à une valeur de seuil par exemple de 40%. L'humidité relative est ici mesurée au niveau du point 75 froid des conduites de soufflage. Ainsi, dans le mélange gazeux stérilisant au niveau du point 75 froid, la quantité de vapeur d'eau comprend non seulement la quantité de vapeur d'eau qui était présente dans la vapeur stérilisante, mais aussi la quantité de vapeur d'eau déjà présente dans la conduite.

La température "Ti" de traitement est déterminée de manière que la saturation "RS" relative au niveau du point 75 froid du réseau 26 de soufflage soit comprise dans une plage déterminée s'étendant entre 70% et 90%, de préférence entre 80% et 90%.

La borne supérieure de cette plage permet de réserver une marge d'erreur pour garantir qu'aucune condensation n'apparaîtra dans les conduites du réseau 26 de soufflage.

La borne inférieure de cette plage permet d'obtenir deux avantages. Cela permet tout d'abord de démarrer plus rapidement l'étape "E2" d'injection du mélange gazeux stérilisant. En outre, on a constaté que l'opération de stérilisation était beaucoup plus efficace lorsque ledit rapport "RS" était élevé.

La saturation "RS" relative est ici mesurée au niveau du point 75 froid des conduites de soufflage au moyen d'un capteur 80 de saturation "RS" relative. Il s'agit par exemple d'un même appareil qui remplit le rôle du capteur 80 de saturation "RS" relative, de capteur 78 d'humidité relative et de la sonde 76 de température. Ledit appareil est par exemple formé par une sonde vendue sous la marque "PEROXCAP" par la société Vaisala sous la référence "HPP272". Un tel dispositif permet de prendre en compte aisément la présence vapeur d'eau résiduelle dans le réseau 26 de soufflage à la fin de la première étape "E1" de chauffage.

On a représenté à la [Fig.6] un diagramme qui représente l'évolution de la saturation "RS" relative en fonction du temps au niveau du point 75 froid pendant le procédé.

Lors de la première étape "E1" de chauffage, la saturation "RS" relative correspond en fait à l'humidité relative "RH" car le réseau 26 de soufflage ne comporte pas encore d'agent stérilisant vaporisé mais seulement de la vapeur d'eau. La saturation "RS" relative baisse régulièrement sous l'effet de l'augmentation de la température du point 75 froid provoquée par le passage du gaz de séchage. Lorsque la température "Ti" de traitement est atteinte, la saturation "RS" relative est inférieure à la valeur de seuil déterminée.

Lors de la deuxième étape "E2" d'injection du mélange gazeux stérilisant, la saturation "RS" relative augmente régulièrement jusqu'à atteindre la plage déterminée. Elle est maintenue dans la plage déterminée par maintien du flux de mélange gazeux stérilisant dans le réseau 26 de soufflage jusqu'à la fin de la deuxième étape "E2" d'injection du mélange gazeux stérilisant.

Enfin, lors de la troisième étape "E3" d'aération, la saturation "RS" relative descend à nouveau progressivement sous l'effet du gaz de séchage pur qui chasse le mélange gazeux stérilisant à l'extérieur du réseau 26 de soufflage.

Une condition "C2" de la saturation "RS" relative est régulièrement testée au cours de la deuxième étape "E2" d'injection du mélange gazeux stérilisant. Lorsque le capteur 78 mesure une saturation "RS" relative supérieure à 90%, il envoie un signal à une unité électronique de contrôle (non représentée) qui commande la fermeture du dispositif 72 de distribution de liquide stérilisant et/ou la fermeture de la vanne 74 de régulation pour empêcher l'arrivée de vapeur stérilisante dans le réseau 26 de soufflage et empêcher ainsi toute condensation, comme indiqué par la référence "S1".

La source 62 commandée de vapeur stérilisante est commandée avec un débit constant lors de la deuxième étape "E2" d'injection du mélange gazeux stérilisant du procédé de stérilisation. Un dispositif de distribution qui produirait un débit pulsé, tel qu'une pompe péristaltique n'est pas considéré, au sens de l'invention, comme un dispositif susceptible de produire un débit de vapeur constant au sens de l'invention.

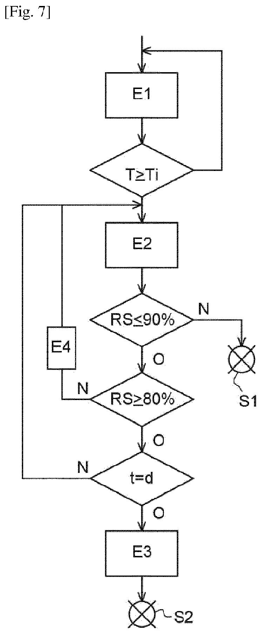

Selon un deuxième mode de réalisation du procédé de stérilisation qui est représenté à la [Fig.7], la source 62 commandée de vapeur stérilisante présente un débit susceptible d'occuper au moins un débit intermédiaire entre un débit nul et un débit maximal tout au long du procédé de stérilisation.

Le débit est par exemple susceptible de varier de manière continue. Dans ce cas, le dispositif 72 de distribution est formé par une vanne à débit réglable.

En variante non représentée, le débit est susceptible de varier de manière discrète. Le dispositif 72 de distribution est par exemple formé par plusieurs conduites de sections de passage différentes qui sont agencées en parallèle entre le réservoir 64 de liquide stérilisant et l'évaporateur 66. Une vanne commune de distribution à plusieurs voies qui permet d'orienter le liquide vers l'une ou l'autre desdites conduites pour faire varier le débit.

Dans ce mode de réalisation, le débit de vapeur saturante dans la chambre 70 de mélange est commandé en fonction de la mesure réalisée par le capteur 78 pour maintenir la pression partielle de vapeur saturante au plus proche de la borne supérieure de la plage déterminée au niveau du point 75 froid. Par exemple, lorsque la la saturation "RS" relative descend au-dessous d'une borne inférieure, par exemple 80%, le débit de vapeur stérilisante est augmenté lors d'une opération "E4" d'ajustement.

Le procédé de stérilisation réalisé selon les enseignements de l'invention est rapide et il préserve les conduites du réseau 26 de soufflage de la corrosion. Ces objectifs sont atteints simultanément en démarrant la deuxième étape "E2" d'injection du mélange gazeux stérilisant avant que la totalité du réseau 26 de soufflage ne soit chauffée de manière homogène tout en garantissant une température suffisante pour éviter la condensation de l'agent oxydant vaporisé.

Le procédé est en outre très efficace. Cette efficacité est garantie par le maintien d'une saturation "RS" relative assez élevée durant toute la deuxième étape "E2" d'injection du mélange gazeux stérilisant.

## Revendications

1. Procédé de stérilisation d'une machine (10) de formage pour le formage de récipients à partir de préformes en matériau thermoplastique, la machine (10) de formage comportant un réseau (26) de soufflage qui comporte des conduites qui raccordent une source (24) commandée de gaz de soufflage comprimé à au moins une tuyère (20) de soufflage pour former les récipients par soufflage, la machine (10) de formage comportant un dispositif (46) de stérilisation du réseau (26) de soufflage comportant :
- une source (48) commandée d'un gaz de séchage chaud sous pression, distincte de la source (24) commandée de gaz de soufflage, qui est raccordée au réseau de soufflage en un embranchement (49)
d'alimentation ;
- une source (62) commandée de vapeur stérilisante comportant un agent oxydant vaporisé ;
- une chambre (70) de mélange de la vapeur stérilisante avec le gaz de séchage pour former un mélange gazeux stérilisant comportant de l'agent oxydant vaporisé et de la vapeur d'eau ;
le procédé comportant :
- une étape (E1) de chauffage des conduites du réseau (26) de soufflage par injection uniquement du gaz de séchage chaud sous pression, au cours de laquelle le gaz de séchage chauffe les parois internes des conduites du réseau (26) de soufflage ;
- une deuxième étape (E2) d'injection du mélange gazeux stérilisant
dans le réseau (26) de soufflage,
**caractérisé en ce qu'**il comporte une étape de mesure de la température (Ti) de traitement au moyen d'une sonde (76) agencée au niveau du point le plus froid, dit point (75) froid, du réseau (26) de soufflage exposé au mélange gazeux stérilisant et **en ce que** la deuxième étape (E2) d'injection du mélange gazeux stérilisant est enclenchée lorsque le point (75) froid atteint une température (Ti) de traitement qui est supérieure à une température (Td) de condensation de la vapeur d'eau et de l'agent stérilisant vaporisé au niveau dudit point (75) froid, la température (Ti) de traitement étant inférieure à la température (Tg) du gaz de séchage chaud prise à l'embranchement (49) d'alimentation.

2. Procédé selon la revendication précédente, **caractérisé en ce que** la température (Ti) de traitement est déterminée de manière que le rapport, dit saturation (RS) relative, entre la pression partielle du mélange de vapeur d'eau et d'agent stérilisant vaporisé sur la pression de vapeur saturante dudit mélange au niveau du point (75) froid du réseau (26) de soufflage soit comprise dans un plage déterminée s'étendant entre 70% et 90%.

3. Procédé selon la revendication précédente, **caractérisé en ce que** la plage déterminée s'étend entre 80% et 90%.

4. Procédé selon l'une quelconque des revendications précédentes, **caractérisé en ce que** la saturation (RS) relative est mesurée au niveau du point (75) froid du réseau (26) de soufflage au moyen d'un capteur (80).

5. Procédé selon l'une quelconque des revendications précédentes, **caractérisé en ce que** la température (Tg), l'humidité et la pression du gaz de séchage au niveau de l'embranchement (49) d'alimentation sont constants.

6. Procédé selon l'une quelconque des revendications précédentes, **caractérisé en ce que** la source (48) commandée de gaz de séchage est commandée à débit constant pour toute la durée du procédé de stérilisation.

7. Procédé selon l'une quelconque des revendications précédentes, **caractérisé en ce que** la source (62) commandée de vapeur stérilisante est commandée à un débit constant lors de la deuxième étape (E2) d'injection du mélange gazeux stérilisant du procédé de stérilisation.

8. Procédé selon l'une quelconque des revendications 1 à 6, **caractérisé en ce que** la source (62) commandée de vapeur stérilisante présente un débit susceptible d'occuper au moins un débit intermédiaire entre un débit nul et un débit maximal tout au long du procédé de stérilisation.

9. Procédé selon la revendication précédente, **caractérisé en ce que** le débit de vapeur stérilisante dans la chambre (70) de mélange est commandé en fonction de la mesure réalisée par le capteur (80) pour maintenir la saturation (RS) relative dans la plage déterminée au niveau du point (75) froid.

10. Machine (10) de formage pour la mise en oeuvre du procédé réalisé selon l'une quelconque des revendications 1 à 9, la machine (10) de formage comportant un réseau (26) de soufflage qui comporte des conduites qui raccordent une source (24) commandée de gaz de soufflage comprimé à au moins une tuyère (20) de soufflage pour former les récipients par soufflage, la machine (10) de formage comportant un dispositif (46) de stérilisation du réseau (26) de soufflage comportant :
- une source (48) commandée d'un gaz de séchage chaud sous pression, distincte de la source (24) commandée de gaz de soufflage, qui est raccordée au réseau de soufflage en un embranchement (49) d'alimentation ;
- une source (62) commandée de vapeur stérilisante comportant un agent oxydant vaporisé ;
- une chambre (70) de mélange de la vapeur stérilisante avec le gaz de séchage pour former un mélange gazeux stérilisant comportant de l'agent oxydant vaporisé et de la vapeur d'eau ;
**caractérisée en ce qu'**elle comporte une sonde (76) de température agencée au niveau du point le plus froid, dit point (75) froid, du réseau (26) de soufflage exposé au mélange gazeux stérilisant de manière à mesurer la température d'une conduite du réseau (26) de soufflage dans la tuyère (20) ou à proximité de la tuyère (20).

## Patentansprüche

1. Verfahren zur Sterilisation einer Formmaschine (10) zum Formen von Behältern aus Vorformlingen aus thermoplastischem Material, wobei die Formmaschine (10) ein Blasnetz (26) aufweist, das Leitungen aufweist, die eine gesteuerte Quelle (24) von komprimiertem Blasgas mit mindestens einer Blasdüse (20) zum Ausbilden von Behältern durch Blasen verbinden, wobei die Formmaschine (10) eine Vorrichtung (46) zur Sterilisation des Blasnetzes (26) aufweist, die Folgendes aufweist:
- eine gesteuerte Quelle (48) eines druckbeaufschlagten heißen Trocknungsgases, die von der gesteuerten Blasgasquelle (24) getrennt ist und die an einer Versorgungsabzweigung (49) mit dem Blasnetz verbunden ist;
- eine gesteuerte Quelle (62) von sterilisierendem Dampf, die ein verdampftes Oxydationsmittel aufweist;
- eine Kammer (70) zum Mischen des sterilisierenden Dampfs mit dem Trocknungsgas zum Ausbilden eines sterilisierenden Gasgemischs, das verdampftes Oxydationsmittel und Wasserdampf enthält;
wobei das Verfahren Folgendes aufweist:
- einen Schritt (E1) des Erhitzens der Leitungen des Blasnetzes (26) durch Einspritzung nur des druckbeaufschlagten heißen Trocknungsgases, wobei das Trocknungsgas die Innenwände der Leitungen des Blasnetzes (26) erhitzt;
- einen zweiten Schritt (E2) des Einleitens des sterilisierenden Gasgemischs in das Blasnetz (26),
**dadurch gekennzeichnet, dass** es einen Schritt des Messens der Behandlungstemperatur (Ti) mit Hilfe einer Sonde (76) aufweist, die am kältesten Punkt, dem sogenannten Kältepunkt (75), des dem sterilisierenden Gasgemisch ausgesetzten Blasnetzes (26) angeordnet ist, und dass der zweite Schritt (E2) des Einleitens des sterilisierenden Gasgemischs ausgelöst wird, wenn der Kältepunkt (75) eine Behandlungstemperatur (Ti) erreicht, die höher ist als eine Temperatur (Td) der Kondensation des Wasserdampfs und des verdampften Sterilisierungsmittels am Kältepunkt (75), wobei die Behandlungstemperatur (Ti) niedriger ist als die an der Versorgungsabzweigung (49) gemessene Temperatur (Tg) des heißen Trocknungsgases.

2. Verfahren nach dem vorangehenden Anspruch, **dadurch gekennzeichnet, dass** die Behandlungstemperatur (Ti) so bestimmt wird, dass das als relative Sättigung (RS) bezeichnete Verhältnis zwischen dem Partialdruck des Gemischs aus Wasserdampf und verdampftem Sterilisierungsmittel zum Sättigungsdampfdruck des Gemischs am Kältepunkt (75) des Blasnetzes (26) in einem bestimmten Bereich zwischen 70 % und 90 % liegt.

3. Verfahren nach dem vorangehenden Anspruch, **dadurch gekennzeichnet, dass** der bestimmte Bereich zwischen 80 % und 90 % liegt.

4. Verfahren nach einem der vorangehenden Ansprüche, **dadurch gekennzeichnet, dass** die relative Sättigung (RS) am Kältepunkt (75) des Blasnetzes (26) mit Hilfe eines Sensors (80) gemessen wird.

5. Verfahren nach einem der vorangehenden Ansprüche, **dadurch gekennzeichnet, dass** die Temperatur (Tg), die Feuchtigkeit und der Druck des Trocknungsgases an der Versorgungsabzweigung (49) konstant sind.

6. Verfahren nach einem der vorangehenden Ansprüche, **dadurch gekennzeichnet, dass** die gesteuerte Quelle (48) von Trocknungsgas über die gesamte Dauer des Sterilisationsverfahrens mit einem konstanten Durchsatz gesteuert wird.

7. Verfahren nach einem der vorangehenden Ansprüche, **dadurch gekennzeichnet, dass** die gesteuerte Quelle (62) von sterilisierendem Dampf während des zweiten Schritts (E2) des Einleitens des sterilisierenden Gasgemischs des Sterilisationsverfahrens mit einem konstanten Durchsatz gesteuert wird.

8. Verfahren nach einem der Ansprüche 1 bis 6, **dadurch gekennzeichnet, dass** die gesteuerte Quelle (62) von sterilisierendem Dampf einen Durchsatz aufweist, der während des gesamten Sterilisationsverfahrens mindestens einen Zwischendurchsatz zwischen einem Nulldurchsatz und einem maximalen Durchsatz einnehmen kann.

9. Verfahren nach dem vorangehenden Anspruch, **dadurch gekennzeichnet, dass** der Durchsatz von sterilisierendem Dampf in der Mischkammer (70) in Abhängigkeit von der durch den Sensor (80) durchgeführten Messung gesteuert wird, um die relative Sättigung (RS) in dem am Kältepunkt (75) bestimmten Bereich zu halten.

10. Formmaschine (10) zur Durchführung des Verfahrens nach einem der Ansprüche 1 bis 9, wobei die Formmaschine (10) ein Blasnetz (26) aufweist, das Leitungen aufweist, die eine gesteuerte Quelle (24) von komprimiertem Blasgas mit mindestens einer Blasdüse (20) zum Ausbilden von Behältern durch Blasen verbindet, wobei die Formmaschine (10) eine Vorrichtung (46) zur Sterilisation des Blasnetzes (26) aufweist, die Folgendes aufweist:
- eine gesteuerte Quelle (48) eines druckbeaufschlagten heißen Trocknungsgases, die von der gesteuerten Blasgasquelle (24) getrennt ist und die an einer Versorgungsabzweigung (49) mit dem Blasnetz verbunden ist;
- eine gesteuerte Quelle (62) von sterilisierendem Dampf, die ein verdampftes Oxydationsmittel aufweist;
- eine Kammer (70) zum Mischen des sterilisierenden Dampfs mit dem Trocknungsgas zum Ausbilden eines sterilisierenden Gasgemischs, das verdampftes Oxydationsmittel und Wasserdampf enthält;
**dadurch gekennzeichnet, dass** sie eine Temperatursonde (76) aufweist, die am kältesten Punkt, dem sogenannten Kältepunkt (75), des dem sterilisierenden Gasgemisch ausgesetzten Blasnetzes (26) angeordnet ist, um die Temperatur einer Leitung des Blasnetzes (26) in der Düse (20) oder in der Nähe der Düse (20) zu messen.

## Claims

1. Method for sterilizing a forming machine (10) for forming containers from preforms made of thermoplastic material, the forming machine (10) comprising a blowing network (26) which comprises ducts which connect a controlled source (24) of compressed blowing gas to at least one blowing nozzle (20) for forming the containers by blowing, the forming machine (10) comprising a device (46) for sterilizing the blowing network (26) comprising:
- a controlled source (48) of a pressurized hot drying gas, distinct from the controlled source (24) of blowing gas, which is connected to the blowing network at a supply junction (49);
- a controlled source (62) of sterilizing vapour comprising a vaporized oxidizing agent;
- a chamber (70) for mixing the sterilizing vapour with the drying gas to form a sterilizing gaseous mixture comprising vaporized oxidizing agent and water vapour;
the method comprising:
- a step (E1) of heating of the ducts of the blowing network (26) by injection only of the pressurized hot drying gas, during which the drying gas heats up the internal walls of the ducts of the blowing network (26);
- a second step (E2) of injection of the sterilizing gaseous mixture into the blowing network (26),
**characterized in that** it comprises a step of measurement of the treatment temperature (Ti) by means of a probe (76) arranged at the coldest point, called cold point (75), of the blowing network (26) exposed to the sterilizing gaseous mixture and **in that** the second step (E2) of injection of the sterilizing gaseous mixture is initiated when the cold point (75) reaches a treatment temperature (Ti) which is higher than a condensation temperature (Td) of the water vapour and of the vaporized sterilizing agent at said cold point (75), the treatment temperature (Ti) being lower than the temperature (Tg) of the hot drying gas taken at the supply junction (49).

2. Method according to the preceding claim, **characterized in that** the treatment temperature (Ti) is determined in such a way that the ratio, called relative saturation (RS), between the partial pressure of the mixture of water vapour and of vaporized sterilizing agent and the saturating vapour pressure of said mixture at the cold point (75) of the blowing network (26) lies within a determined range extending between 70% and 90%.

3. Method according to the preceding claim, **characterized in that** the determined range extends between 80% and 90%.

4. Method according to any one of the preceding claims, **characterized in that** the relative saturation (RS) is measured at the cold point (75) of the blowing network (26) by means of a sensor (80).

5. Method according to any one of the preceding claims, **characterized in that** the temperature (Tg), the humidity and the pressure of the drying gas at the supply junction (49) are constant.

6. Method according to any one of the preceding claims, **characterized in that** the controlled source (48) of drying gas is controlled with constant flow rate for the entire duration of the sterilization method.

7. Method according to any one of the preceding claims, **characterized in that** the controlled source (62) of sterilizing vapour is controlled with a constant flow rate during the second step (E2) of injection of the sterilizing gaseous mixture of the sterilization method.

8. Method according to any one of Claims 1 to 6, **characterized in that** the controlled source (62) of sterilizing vapour has a flow rate capable of occupying at least one intermediate flow rate between a zero flow rate and a maximum flow rate throughout the sterilization method.

9. Method according to the preceding claim, **characterized in that** the flow rate of sterilizing vapour in the mixing chamber (70) is controlled according to the measurement performed by the sensor (80) to keep the relative saturation (RS) within the determined range at the cold point (75).

10. Forming machine (10) for implementing the method performed according to any one of Claims 1 to 9, the forming machine (10) comprising a blowing network (26) which comprises ducts which connect a controlled source (24) of compressed blowing gas to at least one blowing nozzle (20) for forming the containers by blowing, the forming machine (10) comprising a device (46) for sterilizing the blowing network (26) comprising:
- a controlled source (48) of a pressurized hot drying gas, distinct from the controlled source (24) of blowing gas, which is connected to the blowing network at a supply junction (49);
- a controlled source (62) of sterilizing vapour comprising a vaporized oxidizing agent;
- a chamber (70) for mixing the sterilizing vapour with the drying gas to form a sterilizing gaseous mixture comprising vaporized oxidizing agent and water vapour;
**characterized in that** it comprises a temperature probe (76) arranged at the coldest point, called cold point (75), of the blowing network (26) exposed to the sterilizing gaseous mixture so as to measure the temperature of a duct of the blowing network (26) in the nozzle (20) or in proximity to the nozzle (20).
